# EUROPEAN PATENT APPLICATION

(11) **EP 4 390 850 A1**
(43) Date of publication of application: **26.06.2024**
(21) Application number: 22215064.1
(22) Date of filing: 20.12.2022
(51) Int. Cl.: G06T 11/60, G06T 7/11

(54) **DEFINING A LOCATION FOR A LABEL IN A MEDICAL IMAGE**

(71) Applicant: Koninklijke Philips N.V., 5656 AG Eindhoven (NL)
(72) Inventor: PALDE, Akash Subhash, Eindhoven (NL); AIRSANG, Urmila, Eindhoven (NL); VAJINEPALLI, Pallavi, 5656AG Eindhoven (NL); RAJAMANI, Kumar Thirunellai, Eindhoven (NL); FIRTION, Celine, Eindhoven (NL); OKALY, Vikram, Eindhoven (NL); GIRIN, Abhijith, Eindhoven (NL); AWASTHI, Manish, Eindhoven (NL); BENDE, Prajwal, Eindhoven (NL); BHOWMICK, Soumabha, Eindhoven (NL); MISHRA, Chandan, Eindhoven (NL)
(74) Representative: Philips Intellectual Property & Standards

(57) **Abstract**

A mechanism for defining locations for any labels of a medical image. One or more label zones are identified by processing the medical image. Each label zone is a region of the medical image that is either not relevant for the desired clinical examination and/or whose pixels have intensity values that vary by less than a predetermined amount. Each label is positioned responsive to the location of the identified label zones.

## Description

### FIELD OF THE INVENTION

The present invention relates to the field of medical imaging.

### BACKGROUND OF THE INVENTION

It is a common requirement of medical imaging procedures to label any structures and/or features visible in the medical image. This is for reduced error in analysis, and ease of assessing any structures/features within the medical image.

There has been an increasing development and use of automated detection techniques for detecting or segmenting of anatomical features and/or elements within a medical image. Such techniques typically produce segmentation information, which identifies the bounds of one or more regions within the medical image, as well as label information, which provides a label or identifier for each identified region.

An ongoing problem is in how to appropriately define of a location for a label automatically, i.e., without user input. Inappropriate placement of a label's location could lead to confusion and/or error when analyzing the medical image (e.g., if the label can be mistakenly attributed to an incorrect region) or obstruction of clinically relevant information in the medical image, e.g., if the label obfuscates clinically relevant features represented within the medical image.

One existing approach is to simply place the label at a centroid or center point of the relevant region. This approach reduces a chance of confusing the label for that of another region.

There is a desire for improved approaches for defining a location for labels of segmented regions within a medical image.

### SUMMARY OF THE INVENTION

The invention is defined by the independent claims. The dependent claims define advantageous embodiments

According to examples in accordance with an aspect of the invention, there is provided a computer-implemented method for defining the location of one or more labels for a medical image of a subject for a desired clinical examination. The method comprises: obtaining the medical image, wherein the medical image defines an intensity value for each of a plurality of pixels; obtaining segmentation information that identifies the bounds of one or more regions relevant for the desired clinical examination in the medical image; obtaining label information that identifies, for each region in the medical image, a label for said region; processing the medical image to identify, if present, one or more label zones, wherein each label zone represents a continuous portion of the medical image that: is not relevant for the desired clinical examination (i.e., clinically irrelevant for the desired clinical examination) and/or whose pixels have intensity values that vary by less than a predetermined amount; and defining a location for each label of the one or more regions, as identified in the label information, responsive to the location of, if present, the one or more label zones.

The present disclosure proposes a technique for placing a label for a segmented region of a medical image. For each region, the label is positioned responsive to the location of one or more label zones identified within the medical image. Each label zone represents a zone or region that is less likely to block or obfuscate a clinically relevant anatomical feature or structure for the desired clinical examination than other regions.

In particular, a label zone may represent a region/zone that is not relevant for the desired clinical examination. This avoids or reduces the likelihood that the label will be located within a relevant region. Alternatively, a label zone may represent a region having pixels with intensity values that vary by less than a predetermined amount (i.e., have substantially uniform intensity values). It has been recognized that relevant anatomical structures or elements typically have pixel intensity values that value by a significant amount.

The proposed approach thereby reduces a likelihood that the label will be positioned in a location that obfuscates a clinically relevant anatomical feature or structure. The proposed approach thereby credibly assists a clinician in assessing and/or analyzing a medical image (e.g., to make a clinician decision), by reducing the likelihood that potentially clinically relevant matter is blocked or obscured.

The medical image may, for instance, be an ultrasound image of a patient or other subject.

In the context of the present invention, the position of a label is considered to be the position at which a label is located. The position of a label may be defined at a particular location with respect to the label itself, e.g., a center of the label or a particular corner of a label.

A label is a textual or symbolic (e.g., numeric) annotation for a particular region. A label facilitates semantic identification of the region and/or identification of a characteristic of the region (e.g., a measurement of a particular parameter of a region, such as its size or the like).

Preferably, for each label zone, the pixels of the label zone have intensity values that vary by less than a predetermined amount. It has been previously mentioned how areas or regions of uniform intensity are unlikely to contain regions of clinical importance. This approach thereby provides a mechanism for easy identification of regions in or next to which a label can be positioned.

In some examples, in each label zone, the pixels of the label zone have intensity values that are below a global threshold intensity value.

In some examples, the step of processing the medical image to identify, if present, one or more label zones comprises, for each region of the medical image: processing the region to identify, as label zones, any sub-regions of the region that each represent a continuous portion of the region whose pixels have intensity values that vary by less than a predetermined amount.

In some examples, the step of defining a location for each label of the one or more regions comprises, for each region, defining a location of the label for the region responsive to the location of any identified sub-regions of the region.

Optionally, for each region, each pixel in any identified sub-region has an intensity value that is below a region-specific threshold intensity value derived from the minimum intensity value of any pixel within the region. This approach positions the label with respect to the darkest areas/portions of the region. Dark areas are less likely to contain elements or features of clinical interest, thereby more appropriately positioning the label to reduce/avoids obscuring of any potentially relevant anatomical feature/elements.

More specifically, this approach will result, if the medical image is an ultrasound image, in the label being positioned with respect to an anechoic area or zone of the region. An anechoic region is a region that does not contain any anatomical elements or features to reflect an ultrasound wave.

In at least one example, each sub-region represents a portion of the region having a size no smaller than a predetermined percentage of the size of the region.

The predetermined percentage may be no less than 10%, and preferably no less than 20%.

The step of defining a location for each label of the one or more regions may comprise, for each region: identifying, as overlapping label zones, any label zones overlapping the region; and defining a location of the label for the region responsive to the location of any overlapping label zones.

The step of defining a location for each label of the one or more regions may comprise, for each region: responsive to a failure to identify any overlapping label zones, defining a location for the label of the region responsive to the location of a predetermined number of nearest label zones to the region, if present. The predetermined number may be 1.

The step of defining a location for each label of the one or more regions may comprise, for each region, defining the location of the label for the region further responsive to the centroid of the region.

The step of defining a location for each label of the one or more regions may comprise, for each region, defining the location of the label for the region further responsive to, if present, the centroid of any other region.

In some examples, each label zone is configured such that, if an ellipse is fitted to the bounds of the label zone, an eccentricity of the ellipse is less than a predetermined eccentricity. The predetermined eccentricity may, for instance, be a value of no more than 0.995, e.g., no more than 0.99, e.g., no more than 0.95.

This approach aims to avoid identifying sub-regions that are in the form of very thin and/or elongated shapes. Such sub-regions are not suited for the positioning of a label, e.g., as the label is likely to prove larger than the width and/or height of such a sub-region.

There is also provided a computer program product comprising instructions which, when executed by a processor, cause the processor to perform any herein disclosed method.

There is also provided a processor for defining the location of one or more labels for a medical image of a subject for a desired clinical examination, wherein the processor is configured to carry out the method as disclosed herein.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flowchart illustrating a method according to an embodiment;
Fig. 2 is a flowchart illustrating a method according to a further embodiment;
Figs. 3 to 7 illustrate examples of medical images; and
Fig. 9 illustrates a processor according to an embodiment.

### DETAILED DESCRIPTION OF THE EMBODIMENTS

The invention will be described with reference to the Figures.

It should be understood that the detailed description and specific examples, while indicating exemplary embodiments of the invention, are intended for purposes of illustration only and are not intended to limit the scope of the invention. These and other features, aspects, and advantages of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for defining locations for any labels of a medical image. One or more label zones are identified by processing the medical image. Each label zone is a region of the medical image that is either not relevant for the desired clinical examination and/or whose pixels have intensity values that vary by less than a predetermined amount. Each label is positioned responsive to the location of the identified label zones.

Embodiments are based on the realization that inappropriate positioning of labels in a medical image can significantly impact the readability or interpretability of the medical image. It would therefore be advantageous to position the labels such that interpretability is not affected. The proposed approach overcomes this through appropriate positioning of the labels.

Disclosed approaches can be used to control the position of labels for any form of medical image, particularly ultrasound images.

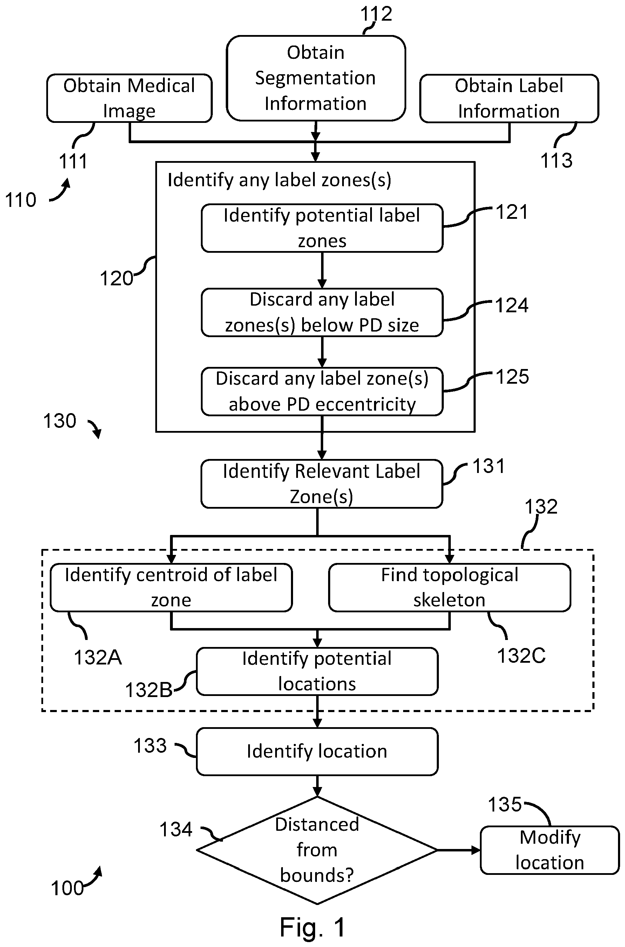

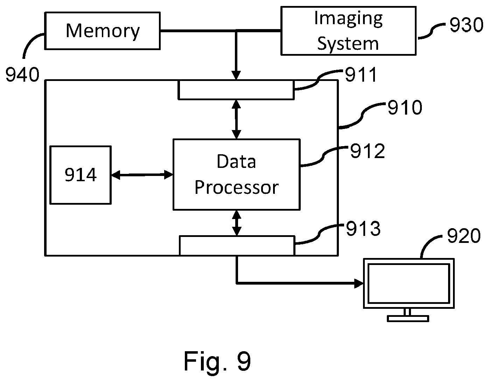

Fig. 1 illustrates a method 100 for defining the location of one or more labels for a medical image. Method 100 may be performed by a processor, e.g. by the processor 910 shown in Fig. 9.

The method 100 can be conceptually divided into an obtaining process 110 (sometimes called an initialization process), a label zone identification process 120 and a label positioning process 130.

The obtaining process 110 comprises a step 111 of obtaining the medical image. The medical image defines an intensity value for each of a plurality of pixels. An intensity value typically represents a brightness of an image, and may be in the range [0, 255] or [0, 511].

The medical image may be a 2D image or a 3D image. The term "pixel" refers to a smallest unit of space represented by the medical image, and is considered interchangeable with the term "voxel" for a 3D image.

Suitable examples of medical images are well known in the art, and may include ultrasound images, magnetic resonance images, CT images, X-ray images and so on. It will be understood that a medical image is an image producing using a medical imaging technique that provides a visual representation of at least the interior of a subject.

Step 111 may, for instance, comprise retrieving or receiving the medical image from a database or memory system or from a medical imaging system.

The obtaining process 110 also comprises a step 112 of obtaining segmentation information that identifies the bounds of one or more regions in the medical image.

Each region of /in the medical image may be a region of the medical image that is predicted or determined to contain a particular structure or feature, such as an anatomical feature/structure (e.g., an organ or part of an organ) or an interventional device (e.g., a catheter or pacemaker). In preferred examples, the bounds of the region may be the predicted bounds of the structure or feature predicted to be contained within the region, e.g., a shape that is predicted to delimit a relevant structure or feature. Alternatively, the bounds of the region may be a bounding box or shape predicted to contain the relevant structure or feature.

Segmentation information is data that was originally generated by performing one or more segmentation techniques on the medical image. Example segmentation techniques for identifying the bounds of one or more regions (e.g., each representing a different anatomical structure or element) are well-established in the art. A segmentation technique identifies the bounds of a particular region or particular regions of a medical image.

A number of tools and techniques for performing image segmentation have been identified by Pham, Dzung L., Chenyang Xu, and Jerry L. Prince. "A survey of current methods in medical image segmentation." Annual review of biomedical engineering 2.3 (2000): 315-337; Masood, Saleha, et al. "A survey on medical image segmentation." Current Medical Imaging 11.1 (2015): 3-14; and/or Hesamian, Mohammad Hesam, et al. "Deep learning techniques for medical image segmentation: achievements and challenges." Journal of digital imaging 32.4 (2019): 582-596.

The segmentation information may be obtained by retrieving or receiving the segmentation information from a database/memory system or from a medical imaging system. Alternatively, step 112 may comprise performing one or more segmentation techniques on the medical image to generate or produce the segmentation information. Examples of suitable segmentation techniques have been previously described, and other examples would be apparent to the skilled person.

The obtaining process 110 also comprises a step 113 of obtaining label information that identifies, for each region in the medical image, a label for said region.

The label information may be obtained by retrieving or receiving the label information from a database or memory system or from a medical imaging system. Alternatively, step 112 may comprise performing one or more labelling or classification techniques on the medical image to generate or produce the label information.

Each label may be a label that identifies the associated region of the medical image, e.g., identifies the structure/element predicted to be contained within (or bounded by) the associated region of the medical image. In other examples, the label may be a label that provides additional information about the structure/element (e.g., anatomical structure/element) represented by the associated region of the medical image. For instance, if a region is predicted to contain a representation of the heart, then the label may be a heartrate of the heart. As another example, the label may be a label that provides a predicted size of the region. Other suitable examples will be readily apparent to the skilled person.

Thus, a label is a textual or symbolic (e.g., numeric) annotation for a particular region. A label facilitates semantic identification of the region and/or identification of a characteristic of the region (e.g., a measurement of a particular parameter of a region, such as its size or the like).

Label information may have been originally generated alongside the segmentation information. For instance, a segmentation technique may be designed or configured to segment (i.e., identify the bounds of) one or more predetermined (e.g., anatomical) structures in the medical image, with the identity of the structure therefore being known in advance. This information could be used to generate an identifying label for said region.

It will be appreciated how the known identity of the structure represented by a region can also be used to provide additional or other information about the structure represented by a region, e.g., another property of the region. For instance, if the region bounds a heart, then the heartrate of the imaged subject may be retrieved (e.g., from a database or heartrate monitor) and used as the label for the region. As another example, if the region bounds a chamber of the heart, then the blood flow rate in/out of that chamber may be retrieved (e.g., from a database or from a suitable monitoring device) and used as the label for that region. Other example approaches will be apparent to the skilled person.

It will also be appreciated that the label information may have been generated by determining one or more measurements of the corresponding/associated region, e.g., by determining its size and/or monitoring the movement of the feature/element within the region over time. As another example, the label information may have been generated by classifying the region, e.g.., using a classification technique.

However, it will be understood the precise mechanism for generating or producing the label information is immaterial to the underlying approach herein proposed.

The label zone identification process 120 comprises processing the medical image to identify, if present, one or more label zones. Each label zone represents a continuous portion of the medical image that: is not relevant for the desired clinical examination and/or whose pixels have intensity values that vary by less than a predetermined amount.

A continuous portion is a portion of the medical image that contains a plurality of pixels, each of which neighbor (e.g., directly touch or are directly next to) at least one other pixel in the continuous portion, and preferably at least two other pixels in the continuous portion.

Procedure 120 may comprise performing a segmentation technique of the medical image to identify, as a label zone, any regions that are not relevant for the desired clinical examination. It will be appreciated that the precise nature of such regions is dependent upon the type of desired clinical examination.

For instance, if the clinical examination is an investigation of the lungs of the subject, then procedure 120 may comprise identifying, as label zones, any regions of the heart or any regions outside of the subject. Similarly, if the clinical examination is an investigation of the heart of the subject, then procedure 120 may comprise identifying, as label zones, any regions of the lungs or any regions outside of the subject. As another example, if the desired clinical examination is an investigation of the kidneys, then procedure 120 may comprise regions of the bowel, spine and/or any regions outside of the subject.

Procedure 120 may comprise identifying any zones that are not included in any of the one or more regions identified by the segmentation information. This approach recognizes that the identified regions are likely to be of clinical relevance for the clinical examination, such that other regions are less likely relevant for the clinical examination.

The above-described approaches provide mechanisms for identifying one or more label zones that are not relevant for the desired clinical examination (i.e., one or more "clinically irrelevant label zones").

In some examples, procedure 120 comprises identifying, as label zones, one or more continuous regions or zones whose pixels have intensity values that vary by less than a predetermined amount, i.e., have substantially uniform intensity values. These label zones may be called "uniform label zones".

A continuous region or zone is a region or zone that contains a plurality of pixels, each of which neighbor (e.g., directly touch or are directly next to) at least one other pixel in the continuous region/zone, and preferably at least two other pixels in the continuous region/zone.

The predetermined amount may, for instance be a predetermined range for the intensity values (e.g., ±15 or ± 10 for a scenario where possible intensity values are in the range [0, 255]). Thus, in this embodiment, the intensity values of pixels in a same uniform label zone may differ may no more than ±X from a median value of the intensity values in that uniform label zone. The value of X may, for instance, be 15 or 10.

As another example, the predetermined amount may be a predetermined percentage from a median value of the intensity values in a uniform label zone. Thus, in this embodiment, the intensity values of all pixels in a same uniform label zone may differ may no more than 1±Y times a median value of the intensity values in that uniform label zone. The value of Y may, for instance, be 0.15 or 0.10.

Identifying a uniform label zone may be performed by using a region growing technique. For instance, a uniform label zone may be generated by first defining a particular pixel as a prospective label zone and comparing the intensity value of that prospective label zone (initially: a single pixel) to any neighboring pixels (i.e., any pixels that abut any pixel in the prospective label zone). Any neighboring pixels that are sufficiently similar (i.e., differ by less than a predetermined amount) are added to the prospective label zone. The process is then repeated until no neighboring pixels are sufficiently similar. If the prospective label zone (at the outcome of the process) is sufficiently large, then it is a label zone - otherwise it is discarded. A prospective label zone may be sufficiently large when it contains more than a predetermined number of pixels, e.g., more than 20 pixels, or represents more than a predetermined percentage of the medical image.

Another approach for identifying uniform label zones is to process the medical image using a clustering algorithm, such as a fuzzy clustering algorithm, for identifying the label zones. A clustering algorithm will identify zones of similarity, i.e., zones that do not differ by more than a predetermined amount.

Yet another approach is to perform a thresholding technique (e.g., a multi-level or single level thresholding technique) on the medical to identify any uniform label zones. Thresholding techniques that identify continuous portions of an image having intensity values that lie within a certain range are established in the art.

Other approaches for performing procedure 120 will be apparent to the skilled person.

In some examples, procedure 120 includes further constraints/restrictions or further criteria for the label zones, e.g., minimum and/or maximum intensity values; certain locations; minimum size and/or minimum/maximum eccentricity.

This may, for instance, be performed by: identifying a plurality of potential label zones and discarding any that fail to meet certain criteria; and/or only identifying label zones that meet the certain criteria.

In one example, the intensity value of each pixel in any label zone is below a first global threshold intensity value. Effectively, this controls the procedure 120 such that only the "dark" portion(s) of the medical image are identified label zone(s). Dark portions are preferred for determining the placement of a label, as they typically represent regions of little to no clinical interest. This approach is particularly advantageous if the medical image is an ultrasound image, as the dark portions of a region will represent anechoic parts of the region and thereby zones predicted to contain air, which are generally considered to be clinically uninteresting. This form of label zone could be labelled a "dark uniform label zone".

In some examples, the first global threshold intensity value is derived from the minimum intensity value of any/all pixel(s) within the medical image. For instance, the first global threshold intensity value may be the minimum intensity value of the medical image plus a biasing value and/or plus a biasing percentage of the minimum intensity value. In one example, the first global threshold intensity value is the minimum intensity value + 30 or the minimum intensity value + 20 (for a scenario where possible intensity values are in the range [0, 255]).

As another example, the first global threshold intensity value may be predetermined, e.g., set in advance.

In other examples, the intensity value of each pixel in any label zone is above a second global threshold intensity value. Effectively, this controls the procedure 121 such that only the "bright" portion(s) of the medical image can be identified as label zone(s). These could be labelled "bright uniform label zones".

Of course, a combination of these approaches could be used. For instance, in some examples, for each label zone, the intensity value of each pixel in that label zone is either below a first global threshold intensity value or above a second (different and larger) global threshold intensity value. This approach effectively facilitates the identification of the brightest or darkest areas of the medical image.

As one example, procedure 120 may be configured so that each label zone is located entirely within a region identified in the segmentation information. Thus, each label zone may be a sub-region of a region identified in the segmentation information.

For instance, in some embodiments, procedure 120 comprises (for each region) processing the region to identify, as label zones, any sub-regions of the region that each represent a continuous portion of the region whose pixels have intensity values that vary by less than a predetermined amount.

Any above-described approach for identifying a label zone can be readily adapted to process only a region of the medical image to identify any sub-regions of that region as label zones. The term "medical image" may be replaced by the term "region of the medical image" where appropriate.

In some preferred examples, the intensity value of each pixel in any sub-region (i.e., label zone) within a region is below a first region-specific threshold intensity value for the region. Effectively, this controls the procedure 120 such that only the "dark" portion(s) of the region are identified as sub-region(s) or label zone(s). Dark regions are preferred for determining the placement of a label, as they typically represent regions of little to no clinical interest. This approach is particularly advantageous if the medical image is an ultrasound image, as the dark portions of a region will represent anechoic parts of the region and thereby zones predicted to contain air, which are generally considered to be clinically uninteresting.

In some examples, the first region-specific threshold intensity value for the region is derived from the minimum intensity value of any pixel within the region. For instance, the first region-specific threshold intensity value may be the minimum intensity value (of that region) plus a biasing value and/or plus a biasing percentage of the minimum intensity value. In one example, the first region-specific threshold intensity value is the minimum intensity value + 30 or the minimum intensity value + 20 (for a scenario where possible intensity values are in the range [0, 255]).

In other examples, the intensity value of each pixel in any label zone is above a second region-specific threshold intensity value for the region. Effectively, this controls the procedure 121 such that only the "bright" portion(s) of the region are identified as sub-region(s) or label zone(s). This approach may be preferred, for instance, if the region identifies a bone or other bright object, such as an interventional device, within the medical image.

Of course, a combination of these approaches could be used. For instance, in some examples, for each sub-region or label zone within a region, the intensity value of each pixel in that sub-region is either below a first region-specific threshold intensity value for the region or above a second (different and larger) region-specific threshold intensity value for the region. This approach effectively facilitates the identification of the brightest or darkest sub-regions within the region.

In some examples, each sub-region (being a label zone) represents a portion of the region having a size no smaller than a predetermined percentage of the size of the region. Thus, each label zone represented by a sub-region of a region identified in the segmentation information may have a minimum size (e.g., no smaller than a predetermined percentage of the size of the region).

In some examples, only the largest sub-region (that can represent a label zone) is identified or selected. Thus, up to one sub-region may be identified as a label zone for each region.

In some examples, each identified label zone may have a minimum size, e.g., no less than a predetermined percentage or proportion of the medical image. Thus, each label zone may have a size no less than a predetermined percentage (e.g., 10% or 20%) of the size of the medical image. Here, the size may correspond to a total area or volume of the medical image.

In some examples, the minimum size for each identified label zone may be dependent upon the size of the label(s) that are to be positioned in the label zone(s). For instance, the minimum size may be no smaller than the size of the largest of the labels for the nearest X regions (relevant for the desired clinical examination) closest to the identified label zone. X is any integer value. An alternative to the nearest X regions is any region falling within a predetermined distance of the identified label zone.

Accordingly, procedure 121 may comprise a step 124 of discarding any label zones having a size below the predetermined size, e.g., the predetermined percentage of the medical image ("PD size").

In some examples, each identified label zone is configured such that, if an ellipse is fitted to the bounds of the label zone, an eccentricity of the ellipse is less than a predetermined eccentricity. This approach effectively checks a spread of the label zone to determine or establish whether the region is appropriately shaped for a label.

Approaches for fitting an ellipse to a known shape or region are established in the art. Some example approaches are disclosed by Mulchrone, Kieran F., and Kingshuk Roy Choudhury. "Fitting an ellipse to an arbitrary shape: implications for strain analysis." Journal of structural Geology 26.1 (2004): 143-153 or the fitEllipse function defined in OpenCV Python ^{®}.

Approaches for determining an eccentricity of an ellipse are well known in the field of mathematics, and have not been described for the sake of conciseness.

Thus, procedure 121 may comprise a step 125 of discarding any identified label zones having an eccentricity above a predetermined eccentricity ("PD eccentricity"). This approach aims to avoid cases where the label zone(s) is/are very thin and/or elongated, which would not be optimal for label positioning.

The predetermined eccentricity may, for instance, be a value of no more than 0.995, e.g., no more than 0.99, e.g., no more than 0.95. For instance, the predetermined eccentricity may be 0.99.

Process 130 comprises processing any identified label zones in order to identify a location for the label of each region. As previously explained, the label of each region is identified in the label information.

The location of the label may be defined by the position of the center of the label. Thus, the location of the label may be the location of the center of the label. In other examples, the location of the label may be a predefined corner of the label, e.g., a bottom-left corner of the label. The precise definition for the location of the label may depend upon the technology or programming language used to define the location of an object, such as a label, with respect to an image.

Process 130 may comprise a step 131 of identifying, for each region, any relevant label zones. A relevant label zone is a label zone that meets one or more predetermined criteria to be associable with a region.

In some examples, different regions have different, non-overlapping sets of one or more label zones. In other example, label zones may be shared between different regions.

In one example, a relevant label zone is a label zone that wholly overlaps the region, i.e., is a sub-region of the region. In approaches in which procedure 120 includes identifying sub-regions of the region, step 131 may be effectively integrated into procedure 120.

In another example, a relevant label zone is a label zone that partially or wholly overlaps (i.e., overlaps) the region, e.g., is either a sub-region of the region or extends into the region. In embodiments of this example, a label zone that partially overlaps a region may only be a relevant zone for that region if there are no label zones that are sub-regions of (i.e., wholly overlap) that region.

In yet another example, a relevant label zone is a label zone that: partially or wholly overlaps the region; or is within predetermined distance of the region. In embodiments of this example, a label zone that is within a predetermined distance of the region (but does not overlap said region) may only be a relevant zone for that region if there are no label zones that are sub-regions of that region or partially overlap that region. Similarly, in some embodiments, a label zone that partially overlaps a region may only be a relevant zone for that region if there are no label zones that are sub-regions of that region.

In yet another example, a relevant label zone is a label zone that: partially or wholly overlaps the region; or (e.g., if there are no overlapping label zones) is one a predetermined number of most proximate label zones to the region.

In some scenarios, the label zones include one or more label zones that are not relevant for the desired clinical examination (i.e., one or more "clinically irrelevant label zones") and one or more label zones that whose pixels have intensity values that vary by less than a predetermined amount (i.e., one or more "uniform label zones"). In such examples, a clinically irrelevant label zone may only be relevant label zone for that region if there are no label zones that are sub-regions of that region, that partially overlap that region or are uniform label zones that are either: within a predetermined distance of the region or one of a predetermined number of most proximate label zones to the region. Similarly, a uniform label zone within the predetermined distance of the region may only be a relevant label zone for that region if there are no label zones that are sub-regions of that region, that partially overlap that region.

In approaches where no relevant labels zones are identified for a region, the region itself may be treated as or act as a relevant label zone for the purposes of subsequent processing.

Thus, in order of priority, the one or more preferred relevant label zones are: label zones wholly contained within the region (if present); label zones overlapping the region (if present); uniform label zones proximate to the region (if present); and clinically irrelevant label zones proximate to the region (if present). There may be an upper limit of the number of relevant label zones to be used. If there are no label zones meeting these criteria, then the region itself may act as the relevant label zone.

However, this order of priority is not essential, and different embodiments or use-case scenarios may make use of different orders or possible options for the relevant label zones.

In preferred examples, process 130 comprises defining, for each region, a location for the label such that the location lies within one of the relevant label zones (if present) for that region. As previously mentioned, if no relevant label zones are identified, then the region itself may act as the relevant label zone.

In preferred examples, if there are a plurality of relevant label zones, process 130 defines the location for the label such that the location lies within the largest of the identified relevant label zones. In other examples, if there are a plurality of relevant label zones, process 130 defines the location for the label such that the location lies within the relevant label zone closest to the centroid of the region to be labelled.

In some examples, the step of defining the location of the label of the region comprises defining the location of the label responsive to the location of the centroid of at least one of the relevant label zones. This approach aims to distance the label from the bounds of the relevant label zone, thereby reducing a likelihood that the label will block or obscure potentially clinically relevant information of the medical image.

For instance, the label may be positioned to lie at or near to the centroid of one of the relevant label zones, e.g., the largest relevant label zone.

In more complex examples, a plurality of potential locations are defined for one of the relevant label zones (e.g., the largest relevant label zone) and the label is positioned to lie at one of these potential locations.

A full working example approach for defining the location for the label of a region using a plurality of locations for a relevant label zone is hereafter provided.

For the purposes of this example, it is assumed that only a single relevant label zone has been identified. This relevant label zone may, for instance, be the largest of a plurality of relevant label zones (if a plurality of relevant label zones are identified) or the only identified relevant label zones (if only one relevant label zones is identified).

As previously explained, where no relevant label zones have been identified for a region, the region itself may act as the relevant label zone. For the sake of conciseness, the term "relevant label zone" is hereafter used to refer to this single relevant label zone or the region itself where appropriate.

The process 130 may comprise a process 132 of identifying a plurality of potential locations for a label within the relevant label zone. In this way, each relevant label zone (and therefore each region) has an associated or corresponding plurality of potential locations for the label (of said region).

In one example, process 132 may simply comprise defining any location within the relevant label zone as a potential location, such that all locations in the relevant label zone act as the plurality of potential locations.

In the illustrated example, process 132 is performed by identifying the plurality of potential labels responsive to the location of the centroid of the relevant label zone.

Step 132 may comprise, for instance, a sub-step 132A of identifying the centroid of the relevant label zone, using a well-established centroid identification technique, and a sub-step 132B of identifying the plurality of locations based on the identified location.

As one example, sub-step 132B can be performed using a topological skeleton.

Approaches for determining or finding a topological skeleton are well established in the art, such as the approach disclosed by Golland, Polina, W. Eric, and L. Grimson. "Fixed topology skeletons." Proceedings IEEE Conference on Computer Vision and Pattern Recognition. CVPR 2000 (Cat. No. PR00662). Vol. 1. IEEE, 2000 or the "skeletonize" function provided by the scikit-image package of algorithms for image processing in Python ^{®}.

Sub-step 132B may correspondingly comprises identifying a plurality of potential locations for the label using the topological skeleton. Each potential location is located on the topological skeleton, and represents one of the K-nearest locations to the centroid of the relevant label zone. Thus, step 132B comprises identifying the K-nearest neighbors of locations along the topological skeleton to the centroid of the relevant label zone. The value of K may be predetermined or responsive to the number of points of the topological skeleton, e.g., 10% of the total number of points of the topological skeleton.

Accordingly process 132 may further comprise a sub-step 132C of determining or finding a topological skeleton (alternatively labelled a skeleton or skeleton structure) of the relevant label zone.

An alternative approach to performing step 132B is to simply identify a plurality of potential locations at predetermined distances and/or directions from the centroid of the relevant label zone. For instance, the plurality of potential locations may include locations and distances of 0, 5, 10 and 20 pixels from the centroid in a plurality of directions (e.g., in at least 4 evenly distributed directions from the centroid). This would produce X.N + 1 potential locations, where X is the number of directions and N is the number of distances (with the value "1" representing a potential location at the centroid of the relevant label zone).

Other suitable techniques for defining a plurality of locations using a centroid of a relevant label zone will be apparent to the skilled person.

Of course, other approaches for defining a plurality of potential locations could be used. For instance, some approaches may identify only locations that are more than a predetermined distance from the bounds of the relevant label zone as the plurality of potential locations.

The process 130 may then select, in a step 133, one of the plurality of potential locations to act as the identified location.

Step 133 may comprise identifying the potential location that has the smallest distance from the centroid of the region (associated with said plurality of potential locations).

Step 133 may comprise identifying the potential location that has the greatest average distance from the centroid of any other region (or relevant label zone for any other region) identified in the segmentation information. This effectively identifies a location that is most distant (on average) from the other region, i.e., is farthest away from rest of the other centroids.

In another example, step 133 may comprise identifying the potential location that is further from the bounds of the region associated with the relevant label zone. This is particularly advantageous when the relevant label zone is a sub-region of the region.

In some examples, process 130 further comprises a step 134 of determining or establishing whether the identified location (from step 133) is less than a predetermined distance away from the bounds of the region.

The predetermined distance may, for instance, be a distance selected to reduce or minimize the amount of overlap between the label and the bounds of the anatomical region. The bounds of an anatomical region contain important clinical information, so it is preferably to avoid overlap of the visual representation of the label and the bounds.

Responsive to a negative determination in step 134, the identified location is output as the location for process 130.

Responsive to a positive determination in step 134, the identified location is modified in a step 135 to increase a distance of the identified location from the bounds of the region.

By way of example, step 135 may comprise identifying, as a furthest pixel, the pixel in the relevant label zone that is most distant from the bounds of the region; and modifying the potential location to lie at a location of the furthest pixel.

Thus, step 135 may effectively comprise computing the distance transform for each and every pixel inside the relevant label zone and identifying the location of the pixel with the largest maximum distance transform value as the location of the label. This location thereby effectively denotes the point in the relevant label zone which is farthest away from the boundary.

In addition, the label font-size may also be adjusted to fit a label location.

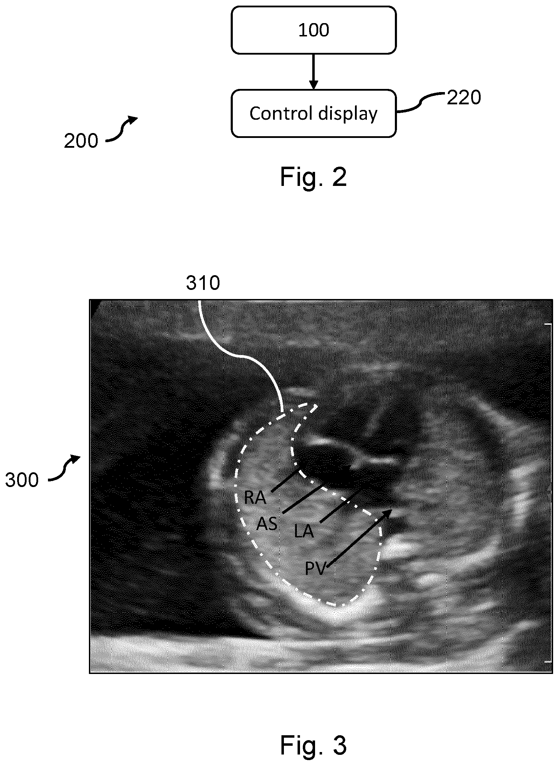

Fig. 2 illustrates a computer-implemented method 200 that employs any previously described process.

Thus, method 200 comprises performing the method 100 previously described.

The method 200 also comprises a step 220 of controlling an output user interface (i.e., a display) to provide a visual representation of the medical image and the one or more labels contained in the label information. The location of each label with respect to the medical image is determined in method 100 and used to control the position of each label, e.g., to align or match with the identified location for said label.

In particular, for each label the visual representation of the label may be controlled to overlay the visual representation of the medical image at the defined location for the label.

It will be appreciated that step 220 may further comprise controlling the output user interface to provide a visual representation of an identifying link (e.g., arrow or curve) between the label and the region associated with the label.

Step 220 may comprise controlling the intensity or color of the label responsive to the intensity of the label zone. For instance, if the label zone has a relatively low intensity, then the label may have a relatively high intensity and vice versa.

In some preferred examples, step 220 comprises controlling the output user interface to further provide a visual representation of the bounds of each region in the medical image, identified in the segmentation information.

The effect of step 220 is to provide a display of the medical image and the one or more labels for each region, with the display optionally indicating the bounds of each region.

Fig. 3 illustrates an example medical image 300, and accompanying labels, for which the locations of the labels have been identified by performing the herein disclosed approach.

More specifically, each label is located in a label zone 310, which here represents a continuous portion of the medical image 300 (here: a portion represent a lung) that is not relevant for a desired clinical examination (here: an investigation of the heart), i.e., is a clinically irrelevant label zone.

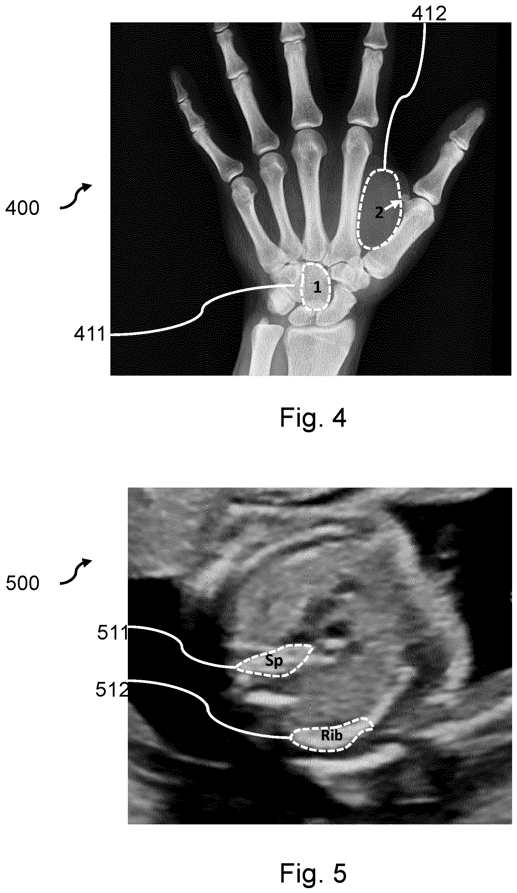

Fig. 4 illustrates an example medical image 400, and accompanying labels, for which the locations of the labels have been identified by performing the herein disclosed approach.

More specifically, each label is located in a different label zone 411, 412, which here represents a continuous portion of the medical image 400 whose pixels have intensity values that vary by less than a predetermined amount. Each label has here been positioned at a center of the respective label zone.

A first label zone 411 is an example of a uniform label zone that lies within the labelled region. In this example, the first label zone is a bright uniform label zone. The label for the first label zone may be provided in a contrasting color or brightness to the bright uniform label zone (e.g., have a low intensity, e.g., be black).

A second label zone 412 is an example of a uniform label zone that lies outside the labelled region. In this example, the second label zone is a dark uniform label zone. The label positioned in the second label zone may be displayed using a contrasting brightness or color to said label zone, e.g., displayed with a bright intensity (e.g., white) rather than a dark intensity.

Fig. 5 illustrates another example medical image 500, and accompanying labels for which the location of the labels have been identified by performing the herein disclosed approach.

More specifically, each label is again located in a different label zone 511, 512, both of which represent a continuous portion of the medical image 500 whose pixels have intensity values that vary by less than a predetermined amount. Each label has here been positioned at a center of the respective label zone.

In these examples, both a third label zone 511 and a fourth label zone 512 is an example of uniform label zones that lie within a labelled region or are the labelled region itself.

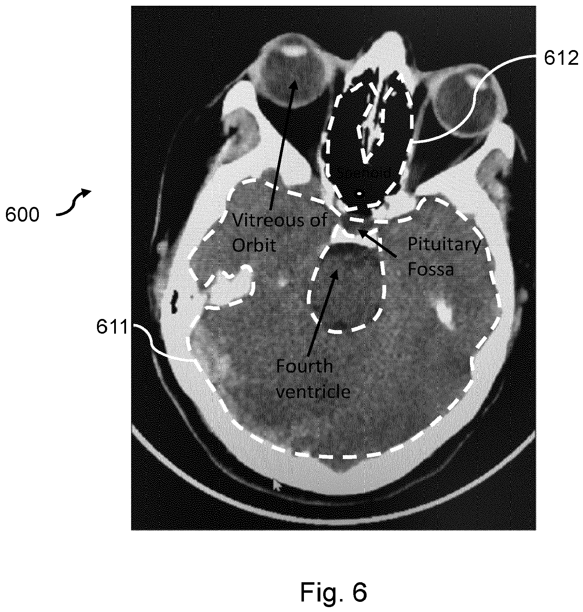

Fig. 6 illustrates another example medical image 600, and accompanying labels for which the location of the labels have been identified by performing the herein disclosed approach.

More specifically, each label is again located in a label zone 611, 612, both of which represent a continuous portion of the medical image 600 whose pixels have intensity values that vary by less than a predetermined amount. Each label has here been positioned at a center of the respective label zone.

In these examples, both a fifth label zone 611 and a sixth label zone 616 are examples of uniform label zones. This example also illustrates how a single label zone can be used to carry a plurality of labels, e.g., for different regions of the medical image 600.

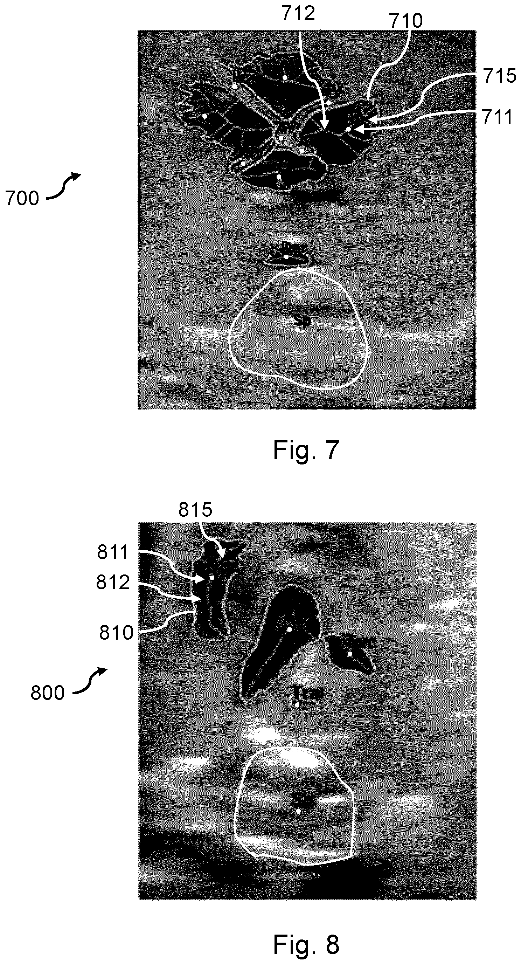

Fig. 7 illustrates yet another example of a medical image 700, and accompanying labels for which the location of the labels have been identified by performing the herein disclosed approach.

More specifically, Fig. 7 illustrates a four-chamber (4CH) view of the heart. Potential regions relevant for a particular clinical examination of the heart include anatomical substructures of the heart. The following list provides example of suitable anatomical substructures for a clinical examination, together with the associated label in paratheses: Left Atrium (LA); Right Atrium (RA); Left ventricle (LV); Right ventricle (RV); Mitral Valve (MV); Tricuspid Valve (TV); IV Septum (IV); Atrium Septum (AT); AV Septum (AV); Spine Triangle (Sp) and Descending Aorta (Dar).

One or more of these regions may be identified. The labels for said regions are then positioned to lie within label zones identified using a previously described approach.

As a specific example, Fig. 7 illustrates a label 715 for the right atrium RA. The label 715 is positioned within a label zone 710 (represented by a contour) which here is a uniform label zone within the region to be labelled (e.g., within the right atrium). The label 715 is positioned at a location 711 (represented by a circular shape), which has been calculated or determined using a previously described approach. In particular, the location 711 is determined using a previously described technique that makes use of a topology skeleton 712. The topology skeleton 712 has been included purposes of illustrative clarity and may, for instance, be absent in the labelled medical image output by the present invention.

The other labels for the other anatomical structures visible in the 4CH view of the heart have been positioned using a similar technique. For the sake of illustrative clarity, the contour representing each label zone used for the corresponding label, the location of the label (represented with a respective circular shape), and the topology skeleton used to determine the location of the label have also been illustrated. These may, in practice, be omitted from the labelled medical image.

Fig. 8 illustrates yet another example of a medical image 800, and accompanying labels for which the location of the labels have been identified by performing the herein disclosed approach.

More specifically, Fig. 8 illustrates a three vessel and trachea (3VT) view. The following list provides example of suitable regions (e.g., anatomical substructures) for a clinical examination that makes use of such a view, together with the associated label in paratheses: Ductal Arch (Duc); Aortic Arch (Aor); SVC (Svc); Trachea (Tra); and Spine Triangle (Sp).

One or more of these regions may be identified. The labels for said regions are then positioned to lie within label zones identified using a previously described approach.

As a specific example, Fig. 8 illustrates a label 815 for the ductal arch DC. The label 815 is positioned within a label zone 810 (represented by a contour) which here is a uniform label zone within the region to be labelled (e.g., within the ductal arch). The label 815 is positioned at a location 811 (represented by a circular shape), which has been calculated or determined using a previously described approach. In particular, the location 811 is determined using a previously described technique that makes use of a topology skeleton 812. The topology skeleton 812 has been included purposes of illustrative clarity and may, for instance, be absent in the labelled medical image output by the present invention.

The other labels for the other anatomical structures visible in the 3VT view have been positioned using a similar technique. For the sake of illustrative clarity, the contour representing each label zone used for the corresponding label, the location of the label (represented with a respective circular shape), and the topology skeleton used to determine the location of the label have also been illustrated. These may, in practice, be omitted from the labelled medical image.

It is also noted that Figs. 7 and 8 illustrate example in which the label zones are dark uniform label zones. Accordingly, the label may be displayed using a contrasting brightness or color to the label zone(s), e.g., displayed in white rather than black.

Fig. 9 illustrates a system 900 according to an embodiment.

The system 900 comprises a processor 910 and an output user interface 920. The system 900 may optionally comprise an imaging system 930 and/or a memory or storage system 940.

The processor 910 is configured for defining the location of one or more labels for a medical image.

The processor 910 comprises an input interface 911, a data processor 912 and, optionally, an output interface 913.

The processor 910 is configured to obtain the medical image, segmentation information and label information. At least some of this information may be obtained by via the input interface 911 of the processor 910.

The medical image defines an intensity value for each of a plurality of pixels. The segmentation information identifies the bounds of one or more regions in the medical image. The label information identifies, for each region in the medical image, a label for said region.

The medical image may be received/retrieved, via the input interface 911, from the imaging system 930 and/or the storage system 940.

The segmentation information may be received/retrieved, via the input interface 911, from the storage system 940. Alternatively, the segmentation information may be generated by performing one or more segmentation techniques on the obtained medical image.

The label information may be received/retrieved, via the input interface 911, from the storage system 940. Alternatively, the label information may be generated by the data processor performing one or more labelling techniques on the obtained medical image. One or more of the labelling techniques may be at least partially integrated into the segmentation technique(s).

The processor 910 is further configured to use the data processor 912 to, for each region of the medical image whose bounds are identified in the segmentation information: process the medical image to identify, if present, one or more label zones, wherein each label zone represents a continuous portion of the medical image that: is not relevant for the desired clinical examination and/or whose pixels have intensity values that vary by less than a predetermined amount; and define a location for each label of the one or more regions, as identified in the label information, responsive to the location of, if present, the one or more label zones.

In this way, the processor 910 is able to define a location for each label in the label information.

The processor 910 may be further configured to control the output user interface 920, e.g., via the output interface 913, to provide a visual representation of the medical image and the one or more labels contained in the label information. The location of each label with respect to the medical image is thereby determined 100 and used to control the position of each label, e.g., to align or match with the identified location for said label.

The processor 910 can be adapted or configured to perform or carry out any herein described method. The skilled person would be readily capable of making any necessary modifications to the processor in order to perform such methods.

The processor 910 can be implemented in numerous ways, with software and/or hardware, to perform the various functions required. The processor 910 may comprise one or more microprocessors that may be programmed using software (e.g., microcode) to perform the required functions. The processor 910 may however be implemented with or without employing such microprocessors, and also may be implemented as a combination of dedicated hardware to perform some functions and a processor (e.g., one or more programmed microprocessors and associated circuitry) to perform other functions.

Examples of processor components that may be employed in various embodiments of the present disclosure include, but are not limited to, conventional microprocessors, application specific integrated circuits (ASICs), and field-programmable gate arrays (FPGAs).

In various implementations, processor 910 may be associated with one or more storage media such as volatile and non-volatile computer memory 915 such as RAM, PROM, EPROM, and EEPROM. The storage media may be encoded with one or more programs that, when executed on one or more processors (e.g., the data processor 812), perform the required functions. Various storage media may be fixed within a processor or may be transportable, such that the one or more programs stored thereon can be loaded into a processor. Storage media may also be located outside of the processor 910, such as for example in the cloud.

It will be understood that disclosed methods are preferably computer-implemented methods. As such, there is also proposed the concept of a computer program comprising code (e.g., instructions for a computer / processor) for implementing any described method when said program is run on a processor, such as a computer. Thus, different portions, lines or blocks of code of a computer program according to an embodiment may be executed by a processor or computer to perform any herein described method.

There is also proposed a local or remote storage medium that stores or carries a computer program or computer code that, when executed by a processor, causes the processor to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. Measures recited in mutually different dependent claims may advantageously be combined. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A computer-implemented method (100) for defining the location of one or more labels for a medical image of a subject for a desired clinical examination, the method comprising:
obtaining the medical image (111), wherein the medical image defines an intensity value for each of a plurality of pixels;
obtaining segmentation information (112) that identifies the bounds of one or more regions relevant for the desired clinical examination in the medical image;
obtaining label information that identifies (113), for each region in the medical image, a label for said region;
processing the medical image to identify, if present, one or more label zones (120), wherein each label zone represents a continuous portion of the medical image that:
is not relevant for the desired clinical examination and/or
whose pixels have intensity values that vary by less than a predetermined amount; and
defining a location for each label of the one or more regions (130), as identified in the label information, responsive to the location of, if present, the one or more label zones.

2. The method of claim 1, wherein, for each label zone, the pixels of the label zone have intensity values that vary by less than a predetermined amount.

3. The method of claim 2, wherein, for each label zone, the pixels of the label zone have intensity values that are below a global threshold intensity value.

4. The method of any of claims 1 to 3, wherein the step of processing the medical image to identify, if present, one or more label zones comprises, for each region of the medical image:
processing the region to identify, as label zones, any sub-regions of the region that each represent a continuous portion of the region whose pixels have intensity values that vary by less than a predetermined amount.

5. The method of claim 4, wherein the step of defining a location for each label of the one or more regions comprises, for each region, defining a location of the label for the region responsive to the location of any identified sub-regions of the region.

6. The method of any of claims 4 or 5, wherein for each region, each pixel in any identified sub-region has an intensity value that is below a region-specific threshold intensity value derived from the minimum intensity value of any pixel within the region.

7. The method of any of claims 4 to 6, wherein each sub-region represents a portion of the region having a size no smaller than a predetermined percentage of the size of the region.

8. The method of claim 7, wherein the predetermined percentage is no less than 10%, and preferably no less than 20%.

9. The method of any of claims 1 to 8, wherein the step of defining a location for each label of the one or more regions comprises, for each region:
identifying, as overlapping label zones, any label zones overlapping the region; and
defining a location of the label for the region responsive to the location of any overlapping label zones.

10. The method of claim 9, wherein the step of defining a location for each label of the one or more regions comprises, for each region:
responsive to a failure to identify any overlapping label zones, defining a location for the label of the region responsive to the location of a predetermined number of nearest label zones to the region, if present.

11. The method of any of claims 1 to 10, wherein the step of defining a location for each label of the one or more regions comprises, for each region, defining the location of the label for the region further responsive to the centroid of the region.

12. The method of any of claims 1 to 11, wherein the step of defining a location for each label of the one or more regions comprises, for each region, defining the location of the label for the region further responsive to, if present, the centroid of any other region.

13. The method of any of claims 1 to 12, wherein each label zone is configured such that, if an ellipse is fitted to the bounds of the label zone, an eccentricity of the ellipse is less than a predetermined eccentricity.

14. A computer program product comprising instructions which, when executed by a processor, cause the processor to perform the method according to any of claims 1 to 13.

15. A processor (910) for defining the location of one or more labels for a medical image of a subject for a desired clinical examination, the processor being configured to carry out the method according to any of claims 1 to 13.
